# EUROPÄISCHE PATENTANMELDUNG

(11) **EP 4 299 410 A1**
(43) Veröffentlichungstag der Anmeldung: **03.01.2024**
(21) Anmeldenummer: 23181453.4
(22) Anmeldetag: 26.06.2023
(51) Int. Cl.: B61L 15/00, B61L 27/57, B61L 1/16, G07C 5/00, H04W 4/42, H04W 4/12

(54) **DIAGNOSENACHRICHTEN MIT EINDEUTIGER IDENTIFIKATION**

(30) Priorität: 30.06.2022 DE 102022206644
(71) Anmelder: Siemens Mobility GmbH, 81739 München (DE)
(72) Erfinder: Braun, Thorsten, 91088 Bubenreuth (DE)
(74) Vertreter: Siemens Patent Attorneys

(57) **Zusammenfassung**

Die Erfindung betrifft ein computerimplementiertes Diagnoseverfahren, ein computerimplementiertes Instandhaltungsverfahren, ein Diagnosesystem zur Diagnose bei einem Personenbeförderungsfahrzeug (3) sowie die Verwendung einer eindeutigen Diagnoseidentifikationsinformation (UDID) für eine Diagnosenachricht (DN). Bei dem erfindungsgemäßen computerimplementierten Diagnoseverfahren wird eine Diagnosenachricht (DN), welche eine Diagnose wenigstens einer Einrichtung (9) des Personenbeförderungsfahrzeugs (3) repräsentiert, erzeugt (A). Eine Diagnoseidentifikationsinformation (UDID), welche die Diagnosenachricht (DN) eindeutig identifiziert, wird der Diagnosenachricht (DN) hinzugefügt.

## Beschreibung

Die Erfindung betrifft ein computerimplementiertes Diagnoseverfahren, ein computerimplementiertes Instandhaltungsverfahren, ein Diagnosesystem zur Diagnose bei einem Personenbeförderungsfahrzeug sowie die Verwendung einer eindeutigen Diagnoseidentifikationsinformation für eine Diagnosenachricht.

Die Erzeugung von Diagnosenachrichten bzw. Diagnosemeldungen (sogenannte Werkstattdiagnosenachrichten) spielt heutzutage eine zunehmende Rolle beim Betreiben und Instandhalten einer Flotte von Schienenfahrzeugen. Den meisten Steuerprozessen ist zumindest eine Diagnoseeinrichtung zugeordnet, welche die Funktion hat, bei Eintreten bestimmter Ereignisse entsprechende vordefinierte Diagnosenachrichten zu generieren. Die Diagnosenachrichten werden in der Regel in einem zentralen Diagnosesystem auf dem Fahrzeug gesammelt und gespeichert. Zudem werden die Diagnosenachrichten in der Regel an eine landseitige Einrichtung übertragen.

So beschreibt WO 2015/161992 A1 ein Verfahren zur Bereitstellung einer Diagnosenachricht, die zumindest einem Prozess bei einem Schienenfahrzeug zugeordnet ist. Dabei wird der Prozess von zumindest einer Einrichtung des Schienenfahrzeugs ausgeführt, wobei eine dem Prozess zugeordnete Diagnoseeinrichtung des Schienenfahrzeugs wenigstens eine Diagnosemeldung erzeugt.

Vor diesem Hintergrund ist es Aufgabe der Erfindung, die Diagnose bei Personenbeförderungsfahrzeugen zu verbessern.

Diese Aufgabe wird jeweils durch die erfindungsgemäßen Lösungen gemäß den unabhängigen Ansprüchen gelöst.

Bei dem erfindungsgemäßen computerimplementierten Diagnoseverfahren wird eine Diagnosenachricht, welche eine Diagnose wenigstens einer Einrichtung des Personenbeförderungsfahrzeugs repräsentiert, erzeugt. Eine Diagnoseidentifikationsinformation, welche die Diagnosenachricht eindeutig identifiziert, wird der Diagnosenachricht hinzugefügt.

Die Erfindung beruht auf der Erkenntnis, dass Diagnosenachrichten, welche auf dem Personenbeförderungsfahrzeug erzeugt wurden, häufig ohne Bearbeitung oder Ergänzung an den Betreiber des Personenbeförderungsfahrzeugs weitergeben werden. Der Betreiber hat dann ausschließlich Zugriff auf die in der Diagnosenachricht enthaltenen Informationen. Dies ist insbesondere dann der Fall, wenn der Betreiber ein eigenes Verwaltungssystem für die Diagnose und Instandhaltung betreibt. Der Wunsch zum Betreiben eines solchen eigenen Verwaltungssystems besteht bei Betreibern insbesondere deshalb, da mehrere Fahrzeuge und Fahrzeugflotten von unterschiedlichen Herstellern betreiben werden müssen.

Durch die eindeutige Diagnoseidentifikationsinformation wird den Betreibern die Möglichkeit eröffnet, ergänzende Informationen bezüglich der Diagnose zu erlangen, die der Hersteller des Personenbeförderungsfahrzeugs anhand der Diagnoseidentifikationsinformation zur Verfügung stellen kann. Die Diagnoseidentifikationsinformation bildet sozusagen einen Schlüssel, anhand dessen ergänzende Informationen zur Diagnosenachricht auffindbar sind. Der Betreiber kann demnach sein eigenes Verwaltungssystem unberührt lassen und ein etwaiges System des Herstellers steht nicht in unmittelbarem Wettbewerb dazu. Vielmehr stellt der Abruf der ergänzenden Informationen über die Diagnoseidentifikationsinformation eine unabhängige, zusätzliche Leistung und folglich einen Mehrwert für den Betreiber dar, ohne das eigene Verwaltungssystem negativ zu beeinflussen. Die ergänzenden Informationen umfassen beispielsweise statistische Auswertungen, Prognosen, Handlungsempfehlungen zur Abhilfe, etc., welche die Diagnose und Instandhaltung der Einrichtung betreffen.

Die Diagnosenachrichten an sich (d.h. ohne Diagnoseidentifikationsinformation) weisen insbesondere einen Informationsgehalt auf, welcher im Wesentlichen auf die Bezeichnung eines eingetretenen Ereignisses beschränkt ist. Die Diagnosenachricht kann einerseits ausschließlich das Ereignis bezeichnen. Vorteilhaft ist es, wenn die Diagnosenachricht eine Einrichtung und ein zu dieser Einrichtung eingetretenes Ereignis bezeichnet. Typische Formulierungen sind z.B. "Einrichtung A meldet einen Defekt", "Einrichtung B hat angesprochen", "Einrichtung C meldet erfolgreichen Abschluss des Prozesses X", etc. Eine Diagnosenachricht wird daher vorzugsweise beim Eintreten eines vorbestimmten Ereignisses durch die Diagnoseeinrichtung bzw. durch eine Steuereinheit derselben, z.B. durch eine Prozessoreinheit, erzeugt.

Die Diagnoseidentifikationsinformation identifiziert die Diagnosenachricht vorzugsweise in codierter Form und ist beispielsweise als Nummer ausgeführt. Weiter vorzugsweise identifiziert die Diagnoseidentifikationsinformation die Diagnosenachricht eindeutig und einmalig. Der Fachmann versteht den Begriff "einmalig" vorzugsweise dahingehend, dass die für eine Diagnosenachricht verwendete Diagnoseidentifikationsinformation nicht zu einem späteren Zeitpunkt erneut einer weiteren Diagnosenachricht hinzugefügt wird.

Das Personenbeförderungsfahrzeug ist vorzugsweise ein spurgebundenes Fahrzeug, insbesondere ein Schienenfahrzeug, beispielsweise ein Hochgeschwindigkeitszug.

Gemäß einer bevorzugten Ausführungsform des erfindungsgemäßen computerimplementierten Diagnoseverfahrens enthält die Diagnoseidentifikationsinformation eine Fahrzeugidentifikationsinformation, welche das Personenbeförderungsfahrzeug, auf dem die Diagnosenachricht erzeugt wird, identifiziert.

Die Fahrzeugidentifikationsinformation ist vorzugsweise eine UIC-Kennzeichnung für Triebfahrzeuge (UIC: Union Internationale des Chemins de fer). UIC-Kennzeichnungen sind beispielsweise unter https://de.wikipedia.org/wiki/UIC-Kennzeichnung der Triebfahrzeuge beschrieben.

Nach einer weiteren bevorzugten Ausführungsform des computerimplementierten Diagnoseverfahrens enthält die Diagnoseidentifikationsinformation eine Eingangsidentifikationsinformation, welche den Eingangsknoten eines Diagnosesystems des Personenbeförderungsfahrzeugs, an dem die Diagnosenachricht eingeht, identifiziert.

Bei einer Ausführung der Diagnoseidentifikationsinformation mit Fahrzeugidentifikationsinformation muss die Eingangsidentifikationsinformation lediglich am jeweiligen Fahrzeug eindeutig sein.

Vorzugsweise ist das Diagnosesystem ein zentrales Diagnosesystem des Personenbeförderungsfahrzeugs und der Eingangsknoten weiter vorzugsweise der Eingangsknoten, an den die Einrichtung ihre zugehörige Diagnosenachricht übergibt.

Bei einer weiteren bevorzugten Ausführungsform des erfindungsgemäßen computerimplementierten Diagnoseverfahrens enthält die Diagnoseidentifikationsinformation einen Zeitstempel, welcher einen Zeitpunkt, an dem die Diagnoseidentifikationsinformation der Diagnosenachricht hinzugefügt wird, repräsentiert.

Der Zeitstempel wird vorzugsweise anhand einer Unixzeit gebildet, wie sie unter https://de.wikipedia.org/wiki/Unixzeit beschrieben ist.

Gemäß einer weiteren bevorzugten Ausführungsform des erfindungsgemäßen computerimplementierten Diagnoseverfahrens enthält die Diagnoseidentifikationsinformation einen Zähler, durch welchen die Diagnosenachricht von einer weiteren Diagnosenachricht unterscheidbar ist.

Vorzugsweise dient der Zähler dazu, die Diagnosenachricht von einer weiteren Diagnosenachricht mit gleichem Zeitstempel zu unterscheiden.

Gemäß einer bevorzugten Ausführungsform des erfindungsgemäßen computerimplementierten Diagnoseverfahrens wird die Diagnoseidentifikationsinformation der Diagnosenachricht bei Eingang an einem zentralen Fahrzeugdiagnosesystem des Personenbeförderungsfahrzeugs hinzugefügt.

Vorzugsweise wird die Diagnoseidentifikationsinformation der Diagnosenachricht bei Eingang an einem Eingangsknoten des zentralen Fahrzeugdiagnosesystems, an dem die Diagnosenachricht eingeht, hinzugefügt. Der Eingangsknoten ist vorzugsweise der Eingangsknoten, an den die Einrichtung ihre zugehörige Diagnosenachricht übergibt.

Bei einer weiteren bevorzugten Ausführungsform des erfindungsgemäßen computerimplementierten Diagnoseverfahrens wird die Diagnoseidentifikationsinformation der Diagnosenachricht bei Eingang an einem landseitigen Diagnosesystem hinzugefügt.

So werden sämtliche Diagnosenachrichten, die beispielsweise von mehreren Fahrzeugflotten zur Landseite übertragen werden, zentral auf der Landseite mit der Diagnoseidentifikationsinformation versehen.

Das landseitige Diagnosesystem ist beispielsweise eine Servereinrichtung einer landseitigen Einrichtung des Herstellers der Personenbeförderungsfahrzeugs.

Gemäß dem computerimplementierten Instandhaltungsverfahren wird das computerimplementierte Diagnoseverfahren der vorstehend beschriebenen Art ausgeführt und auf Basis der Diagnoseidentifikationsinformation eine Uniform-Resource-Identifier-Information gebildet, über welche die Diagnosenachricht abrufbar ist.

Die Uniform-Resource-Identifier-Information wird vorzugsweise mittels einer Servereinrichtung einer landseitigen Einrichtung eines Betreibers des Personenbeförderungsfahrzeugs gebildet.

Gemäß einer bevorzugten Ausführungsform des computerimplementierten Instandhaltungsverfahrens ruft ein Kommunikationsteilnehmer eines Betreibers des Personenbeförderungsfahrzeugs ergänzende Informationen unter Verwendung der Uniform-Resource-Identifier-Information über eine Kommunikationsverbindung ab.

Die Erfindung betrifft ferner ein Computerprogramm, umfassend Befehle, die bei der Ausführung des Programms durch eine Recheneinrichtung diese veranlassen das computerimplementierte Diagnoseverfahren der vorstehend beschriebenen Art und/oder das computerimplementierte Instandhaltungsverfahren der vorstehend beschriebenen Art auszuführen. Die Erfindung betrifft ferner ein Computerprogrammprodukt mit einem Computerprogramm dieser Art. Die Recheneinrichtung ist vorzugsweise zumindest in Teilen eine Recheneinrichtung des Personenbeförderungsfahrzeugs und/oder der landseitigen Einrichtung.

Die Erfindung betrifft ferner eine Bereitstellungsvorrichtung für das Computerprogramm der vorstehend beschriebenen Art, wobei die Bereitstellungsvorrichtung das Computerprogramm speichert und/oder bereitstellt. Die Bereitstellungsvorrichtung ist beispielsweise eine Speichereinheit, die das Computerprogramm speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogramms. Diese Bereitstellung kann beispielsweise aber auch als partieller Download erfolgen, der aus mehreren Teilen besteht. Ein solches Computerprogramm wird beispielsweise unter Verwendung der Bereitstellungsvorrichtung in ein System eingelesen, sodass das erfindungsgemäße Verfahren auf einem Computer zur Ausführung gebracht wird.

Die Erfindung betrifft ferner eine Verwendung einer eindeutigen Diagnoseidentifikationsinformation für eine Diagnosenachricht, welche eine Diagnose wenigstens einer Einrichtung des Personenbeförderungsfahrzeugs repräsentiert. Vorzugsweise identifiziert die Diagnoseidentifikationsinformation die Diagnosenachricht eindeutig und einmalig.

Das erfindungsgemäße Diagnosesystem umfasst eine Diagnoseeinrichtung, welche eingerichtet ist, eine Diagnosenachricht, welche eine Diagnose wenigstens einer Einrichtung des Personenbeförderungsfahrzeugs repräsentiert, zu erzeugen. Das Diagnosesystem umfasst ferner eine Datenverarbeitungseinrichtung, welche eingerichtet ist, der Diagnosenachricht eine eindeutige Diagnoseidentifikationsinformation hinzuzufügen. Vorzugsweise identifiziert die Diagnoseidentifikationsinformation die Diagnosenachricht eindeutig und einmalig.

Die Erfindung betrifft ferner ein Personenbeförderungsfahrzeug mit einem Diagnosesystem der vorstehend beschriebenen Art.

Das erfindungsgemäße System umfasst ein Personenbeförderungsfahrzeug der vorstehend beschriebenen Art und eine landseitige Einrichtung, wobei das Diagnosesystem Teil des Personenbeförderungsfahrzeugs oder Teil der landseitigen Einrichtung oder verteilt über das Personenbeförderungsfahrzeug und die landseitige Einrichtung ist.

Zu Vorteilen, Ausführungsformen und Ausgestaltungsdetails des erfindungsgemäßen computerimplementierten Instandhaltungsverfahrens, des erfindungsgemäßen Computerprogramms, der erfindungsgemäßen Bereitstellungsvorrichtung, der erfindungsgemäßen Verwendung, des erfindungsgemäßen Diagnosesystems, des erfindungsgemäßen Personenbeförderungsfahrzeugs und des erfindungsgemäßen Systems kann auf die vorstehende Beschreibung zu den entsprechenden Verfahrensmerkmalen des erfindungsgemäßen Diagnoseverfahrens verwiesen werden.

Ein Ausführungsbeispiel der Erfindung wird anhand der Zeichnungen erläutert. Es zeigen:
- Figur 1: schematisch den Aufbau eines erfindungsgemäßen Systems mit einem Personenbeförderungsfahrzeug und einer landseitigen Einrichtung und
- Figur 2: schematisch den Ablauf eines Ausführungsbeispiels eines erfindungsgemäßen Verfahrens.

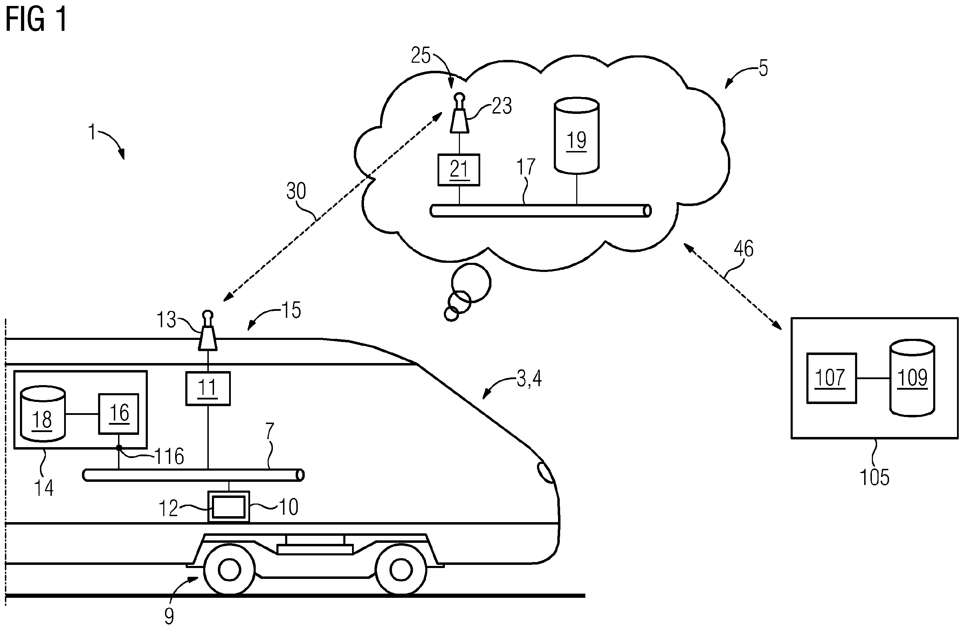

Figur 1 zeigt eine schematische Ansicht eines Systems 1 mit einem Personenbeförderungsfahrzeug 3, einer landseitigen Einrichtung 5, die zu einem Hersteller des Personenbeförderungsfahrzeugs 3 gehört, und einer landseitigen Einrichtung 105, die zu einer Betriebsleitzentrale eines Betreibers des Personenbeförderungsfahrzeugs 3 gehört.

Das Personenbeförderungsfahrzeug 3 ist ein spurgebundenes Fahrzeug 4, insbesondere ein Schienenfahrzeug, beispielsweise ein Hochgeschwindigkeitszug.

Das Personenbeförderungsfahrzeug 3 weist ein Kommunikationsnetz 7 auf, welches als Ethernet-Netz ausgebildet ist. An das Kommunikationsnetz 7 sind beispielsweise eine Antriebssteuereinrichtung 10 und eine Servereinrichtung 14 datentechnisch angeschlossen. Zudem ist ein Mobile-Communication-Gateway 11 an das Kommunikationsnetz 7 angeschlossen, welches mit einer drahtlosen Kommunikationsschnittstelle 13 verbunden ist. Das Mobile-Communication-Gateway 11 bildet zusammen mit der drahtlosen Kommunikationsschnittstelle 13 eine Kommunikationseinrichtung 15, welche ausgebildet ist, Daten an die landseitige Einrichtung 5 zu senden und Daten von der landseitigen Einrichtung 5 zu empfangen.

Die landseitige Einrichtung 5 weist ein Kommunikationsnetz 17 auf, welches als Ethernet-Netz ausgebildet ist. An das Kommunikationsnetz 17 ist beispielsweise eine Servereinrichtung 19 datentechnisch angeschlossen. Zudem ist ein Ground-Communication-Gateway 21 an das Kommunikationsnetz 17 angeschlossen, welches mit einer drahtlosen Kommunikationsschnittstelle 23 verbunden ist. Das Ground-Communication-Gateway 21 bildet zusammen mit der drahtlosen Kommunikationsschnittstelle 23 eine Kommunikationseinrichtung 25, welche ausgebildet ist, Daten an das Personenbeförderungsfahrzeug 3 zu senden und Daten von dem Personenbeförderungsfahrzeug 3 zu empfangen.

Die Kommunikationseinrichtungen 15 und 25 bilden gemeinsam eine Kommunikationsverbindung 30 zum Übertragen von Daten zwischen dem Personenbeförderungsfahrzeug 3 und der landseitigen Einrichtung 5, d. h. ausgehend von dem Personenbeförderungsfahrzeug 3 zur landseitigen Einrichtung 5 sowie ausgehend von der landseitigen Einrichtung 5 zu dem Personenbeförderungsfahrzeug 3.

Das Personenbeförderungsfahrzeug 3 weist bekannterweise eine Anzahl von Einrichtungen auf, die jeweils zur Ausführung von zumindest einem Prozess vorgesehen sind. Insbesondere umfasst das Personenbeförderungsfahrzeug 3 eine Antriebseinrichtung 9, eine Bremseinrichtung, eine Bedieneinrichtung zum Eingeben von Bedienbefehlen durch den Triebfahrzeugführer, eine Beleuchtungseinrichtung, eine Fahrgastinformationseinrichtung, Sanitärzelleneinrichtungen, Türeinrichtungen etc., wobei diese Einrichtungen selbst aus mehreren untergeordneten Einrichtungen bestehen können.

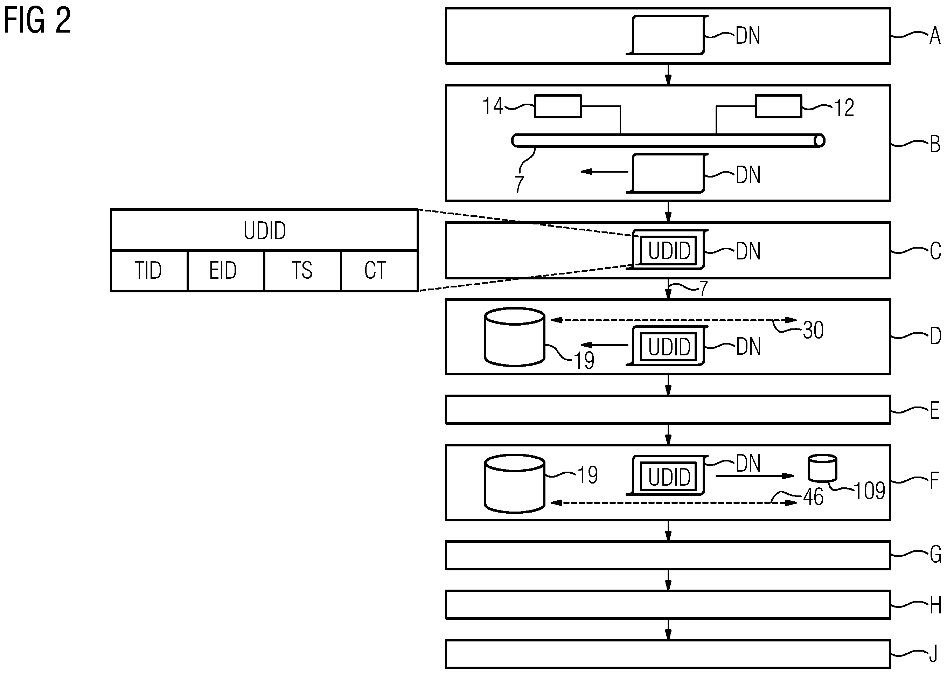

Figur 2 zeigt schematisch den Ablauf eines Ausführungsbeispiels des erfindungsgemäßen Verfahrens.

In dem gezeigten Ausführungsbeispiel des erfindungsgemäßen Systems 1 und des erfindungsgemäßen Verfahrens wird insbesondere die Diagnose der Antriebseinrichtung 9 betrachtet. Die Erfindung ist jedoch sinnfällig auf die Diagnose weiterer Einrichtungen übertragbar und wird in einer realen Implementierung entsprechend mit mehrere zu diagnostizierenden Einrichtungen ausgeführt sein.

Die Antriebseinrichtung 9 enthält Antriebssteuereinrichtung 10, welcher eine Diagnoseeinrichtung 12 zugeordnet ist. Die Diagnoseeinrichtung 12 ist beispielsweise dazu vorgesehen, ein instandhaltungsrelevantes Verhalten der Antriebseinrichtung 9 zu registrieren, indem eine Diagnosenachricht DN bei Erkennung eines solchen Verhaltens in einem Verfahrensschritt A erzeugt wird. Mit anderen Worten: Die Diagnosenachricht DN repräsentiert eine Diagnose der Antriebseinrichtung 9 des Personenbeförderungsfahrzeugs 3.

Die Diagnosenachricht DN wird in einem Verfahrensschritt B über das Kommunikationsnetz 7 an die Servereinrichtung 14 übertragen.

Eine Datenverarbeitungseinrichtung 16 der Servereinrichtung 14 fügt der Diagnosenachricht DN in einem Verfahrensschritt C eine Diagnoseidentifikationsinformation UDID hinzu, welche die Diagnosenachricht DN eindeutig und einmalig identifiziert. Die Servereinrichtung 14 dient als zentrales Fahrzeugdiagnosesystem des Personenbeförderungsfahrzeugs 3. Die Diagnosenachricht DN wird mit der hinzugefügten Diagnoseidentifikationsinformation UDID auf eine Speichereinrichtung 18 der Servereinrichtung 14 gespeichert.

Die Diagnoseidentifikationsinformation UDID enthält eine Fahrzeugidentifikationsinformation TID, welche das Personenbeförderungsfahrzeug 3 identifiziert. Die Fahrzeugidentifikationsinformation TID ist beispielsweise eine UIC-Kennzeichnung für Triebfahrzeuge (UIC: Union Internationale des Chemins de fer), wie sie unter https://de.wikipedia.org/wiki/UIC-Kennzeichnung der Triebfahrzeuge beschrieben ist.

Die Diagnoseidentifikationsinformation UDID enthält ferner eine Eingangsidentifikationsinformation EID, welche einen Eingangsknoten 116 der Servereinrichtung 14, an dem die Diagnosenachricht DN eingeht, identifiziert. Dabei ist der Eingangsknoten derjenige Eingangsknoten, an den die Diagnoseeinrichtung 12 ihre Diagnosenachricht DN übergibt (bei der Übertragung in Verfahrensschritt B).

Aufgrund der Fahrzeugidentifikationsinformation TID muss die Eingangsidentifikationsinformation EID lediglich am jeweiligen Fahrzeug eindeutig sein.

Die Diagnoseidentifikationsinformation UDID enthält ferner einen Zeitstempel TS, welcher beispielsweise als Unixzeit ausgeführt ist, wie sie unter https://de.wikipedia.org/wiki/Unixzeit beschrieben ist. Der Zeitstempel repräsentiert einen Zeitpunkt, an dem die Diagnoseidentifikationsinformation UDID der Diagnosenachricht DN mittels der Datenverarbeitungseinrichtung 16 hinzugefügt wird.

Die Diagnoseidentifikationsinformation UDID enthält ferner einen Zähler CT, welcher die Diagnosenachricht DN von einer weiteren Diagnosenachricht mit dem gleichen Zeitstempel TS unterscheidet.

Die Diagnosenachricht DN (mit hinzugefügter Diagnoseidentifikationsinformation UDID) wird in einem Verfahrensschritt D an die landseitige Einrichtung 5, insbesondere eine Servereinrichtung 19 übertragen. Dazu wird die Diagnosenachrichtung DN über das Kommunikationsnetz 7, die Kommunikationsverbindung 30 und das Kommunikationsnetz 17 an die Servereinrichtung 19 übertragen.

Die Servereinrichtung 19 stellt ergänzende Informationen auf Basis der Diagnosenachrichtung DN zum datentechnischen Abruf in einem Verfahrensschritt E bereit.

In einem Verfahrensschritt F wird die Diagnosenachricht DN - ausgelöst durch eine Abfrage des Betreibers - von der Servereinrichtung 19 zu einer Servereinrichtung 109 des Betreibers heruntergeladen. Das Herunterladen erfolgt über eine Kommunikationsverbindung 46, welche beispielsweise das Word Wide Web (Internet) umfasst.

Die Diagnosenachricht DN wird zudem in einem Verfahrensschritt G in ein Datenverarbeitungssystem 107 des Betreibers importiert, welches beispielsweise zur Verwaltung der Instandhaltung des Personenbeförderungsfahrzeugs 3 dient.

Auf Basis der Diagnoseidentifikationsinformation UDID wird (beispielsweise mittels der Servereinrichtung 109) in einem Verfahrensschritt H eine Uniform-Resource-Identifier-Information URI gebildet, wie sie unter https://de.wikipedia.org/wiki/Uniform Resource Identifier beschrieben ist. Anhand dieser URI kann der Betreiber des Personenbeförderungsfahrzeugs 3 auf ergänzende Informationen, die beispielsweise von der Servereinrichtung 19 bereitgestellt werden, in einem Verfahrensschritt J zugreifen. Die ergänzenden Informationen umfassen beispielsweise statistische Auswertungen, Prognosen, Handlungsempfehlungen zur Abhilfe, etc., welche die Diagnose und Instandhaltung der Antriebseinrichtung 9 betreffen.

## Patentansprüche

1. Computerimplementiertes Diagnoseverfahren zur Diagnose bei einem Personenbeförderungsfahrzeug (3),
bei welchem
- eine Diagnosenachricht (DN), welche eine Diagnose wenigstens einer Einrichtung (9) des Personenbeförderungsfahrzeugs (3) repräsentiert, erzeugt wird (A), und
- eine Diagnoseidentifikationsinformation (UDID), welche die Diagnosenachricht (DN) eindeutig identifiziert, der Diagnosenachricht (DN) hinzugefügt wird.

2. Computerimplementiertes Diagnoseverfahren nach Anspruch 1,
bei welchem
die Diagnoseidentifikationsinformation (UDID) eine Fahrzeugidentifikationsinformation (TID) enthält, welche das Personenbeförderungsfahrzeug (3), auf dem die Diagnosenachricht (DN) erzeugt wird (A), identifiziert.

3. Computerimplementiertes Diagnoseverfahren nach Anspruch 1 oder 2,
bei welchem
die Diagnoseidentifikationsinformation (UDID) eine Eingangsidentifikationsinformation (EID) enthält, welche einen Eingangsknoten eines Diagnosesystems (14) des Personenbeförderungsfahrzeugs (3), an dem die Diagnosenachricht (DN) eingeht, identifiziert.

4. Computerimplementiertes Diagnoseverfahren nach wenigstens einem gemäß der vorhergehenden Ansprüche,
bei welchem
die Diagnoseidentifikationsinformation (UDID) einen Zeitstempel (TS) enthält, welcher einen Zeitpunkt, an dem die Diagnoseidentifikationsinformation (UDID) der Diagnosenachricht (DN) hinzugefügt wird, repräsentiert.

5. Computerimplementiertes Diagnoseverfahren nach wenigstens einem der vorhergehenden Ansprüche,
bei welchem
die Diagnoseidentifikationsinformation (UDID) einen Zähler (CT), durch welchen die Diagnosenachricht (DN) von einer weiteren Diagnosenachricht unterscheidbar ist, enthält.

6. Computerimplementiertes Diagnoseverfahren nach wenigstens einem der vorhergehenden Ansprüche,
bei welchem
die Diagnoseidentifikationsinformation (UDID) der Diagnosenachricht (DN) bei Eingang an einem zentralen Fahrzeugdiagnosesystem (14) des Personenbeförderungsfahrzeugs (3) hinzugefügt wird (C).

7. Computerimplementiertes Diagnoseverfahren nach wenigstens einem der vorhergehenden Ansprüche 1-5,
bei welchem
die Diagnoseidentifikationsinformation (UDID) der Diagnosenachricht (DN) bei Eingang an einem landseitigen Diagnosesystem hinzugefügt wird.

8. Computerimplementiertes Instandhaltungsverfahren,
bei welchem
- das computerimplementierte Diagnoseverfahren nach wenigstens einem der vorhergehenden Ansprüche 1-7 ausgeführt wird und
- auf Basis der Diagnoseidentifikationsinformation (UDID) eine Uniform-Resource-Identifier-Information gebildet wird (H), über welche die Diagnosenachricht (DN) abrufbar ist.

9. Computerimplementiertes Instandhaltungsverfahren nach Anspruch 8,
bei welchem
ein Kommunikationsteilnehmer (109) eines Betreibers des Personenbeförderungsfahrzeugs (3) ergänzenden Informationen unter Verwendung der Uniform-Resource-Identifier-Information über eine Kommunikationsverbindung (46) abruft (E).

10. Computerprogramm, umfassend Befehle, die bei der Ausführung des Programms durch eine Recheneinrichtung (12, 16) diese veranlassen, das computerimplementierte Diagnoseverfahren nach wenigstens einem der Ansprüche 1 bis 8 und/oder das computerimplementierte Instandhaltungsverfahren nach Anspruch 8 oder 9 auszuführen.

11. Bereitstellungsvorrichtung für das Computerprogramm, nach Anspruch 10, wobei die Bereitstellungsvorrichtung das Computerprogramm speichert und/oder bereitstellt.

12. Verwendung einer eindeutigen Diagnoseidentifikationsinformation (UDID) für eine Diagnosenachricht, welche eine Diagnose wenigstens einer Einrichtung (9) des Personenbeförderungsfahrzeugs (3) repräsentiert.

13. Diagnosesystem zur Diagnose bei einem Personenbeförderungsfahrzeug (3),
umfassend:
- eine Diagnoseeinrichtung (12), welche eingerichtet ist, eine Diagnosenachricht (DN), welche eine Diagnose wenigstens einer Einrichtung (9) des Personenbeförderungsfahrzeugs (3) repräsentiert, zu erzeugen, und
- eine Datenverarbeitungseinrichtung (16), welche eingerichtet ist, der Diagnosenachricht (DN) eine eindeutige Diagnoseidentifikationsinformation (UDID) hinzuzufügen.

14. Personenbeförderungsfahrzeug (3) mit einem Diagnosesystem nach Anspruch 13.

15. System (1), umfassend:
- ein Personenbeförderungsfahrzeug (3) nach Anspruch 14
und
- eine landseitige Einrichtung (5),
wobei das Diagnosesystem
- Teil des Personenbeförderungsfahrzeugs (3) oder
- Teil der landseitigen Einrichtung (5) oder
- verteilt über das Personenbeförderungsfahrzeug (3) und die landseitige Einrichtung (5)
ist.
